# EUROPEAN PATENT APPLICATION

(11) **EP 2 505 408 A1**
(43) Date of publication of application: **03.10.2012**
(21) Application number: 10832839.4
(22) Date of filing: 24.11.2010
(51) Int. Cl.: B60K 6/36, B60K 6/48, B60K 6/547, B60K 17/08, B60L 11/14

(54) **MOTIVE POWER TRANSMISSION DEVICE**

(30) Priority: 26.11.2009 JP 2009268310
(71) Applicant: AISIN AI Co., Ltd., Nishio-shi Aichi-ken 445-0006 (JP)
(72) Inventor: OGINO, Daizo, Nishio-shi Aichi 445-0006 (JP); SASAKI, Kan, Nishio-shi Aichi 445-0006 (JP)
(74) Representative: Winter, Brandl, Fürniss, Hübner, Röss, Kaiser, Polte - Partnerschaft
(86) International application number: PCT/JP2010/006839
(87) International publication number: WO 2011/064986

(57) **Abstract**

A power switcher mechanism (11) according to the present invention is characterized in that it includes an input shaft (2), a clutch (13), an output shaft (3), a change-speed mechanism (4), a rotary electric appliance (14), a rotary-electric-appliance shaft (5), and a deceleration means (6) capable of amplifying torques to be output from the rotary electric appliance (14), the deceleration means (6) having a transmission shaft (61), a transmission gear (62), an input-shaft transmission gear (63) that always meshes with one of gears (21 through 25) rotating integrally with the input shaft (2), and which is capable of rotating idly with respect to the transmission shaft (61), an output-shaft transmission gear (64) that always meshes with a gear (36a) rotating integrally with the output shaft (3), which always meshes with the gear (26) being capable of rotating idly with respect to the input shaft (2), and which is capable of rotating idly with respect to the transmission shaft (61), and a power switcher device (65) that rotates integrally with the transmission shaft (61), and which is capable of switching between a state where it engages with either the input-shaft transmission gear (63) or the output-shaft transmission gear (64) to be capable of rotating integrally therewith and another state where it does not engage with any one of them.

## Description

### TECHNICAL FIELD

The present invention relates to a power transmission apparatus. In particular, it relates to a power transmission apparatus to be used for vehicle that has an FF (or front engine-front drive) system.

### BACKGROUND ART

For one of power transmission apparatuses in which an internal combustion engine and a motor are adapted into the power sources, and which convert the rotary powers so as to be adequate torques in value in compliance with the running speeds of vehicle in order to transmit them to the wheels, there is one which is like Patent Literature No. 1, for instance.

### Related Technical Literature

### Patent Literature

Patent Literature No. 1: Japanese Unexamined Patent Publication (KOKAI) Gazette No. 2002-114,048

### DISCLOSURE OF THE INVENTION

### Assignment to be Solved by the Invention

Incidentally, in aforementioned Patent Literature No. 1, since the following are set in place on a third shaft 3a: a motor 3; and a power switcher mechanism 23 that can transmit the motor's rotary powers to an input shaft 11, or to an output shaft 12, the resulting overall length is long. And, although it is feasible to augment the motor's torques by a planetary gear 25, it is difficult to obtain large deceleration ratios because there are limitations on downsizing the idling gears due the influences of the axial diameter. Moreover, there also occurs rise in costs that is accompanied by the increase in the number of component parts when employing a planetary gear.

The present invention is one which has been done in view of the aforementioned assignments. It is an assignment to be solved to provide a power transmission apparatus that can inhibit the overall length from extending, and by which it is possible to obtain necessary change gear ratios.

### Means for Solving the Assignment

Constitutional characteristics of the invention for solving the aforementioned assignment lie in that it is a power transmission apparatus comprising:
an input shaft on which a plurality of gears are put in place, the gears to be put in place being rotatable integrally therewith or being rotatable idly thereto;
a clutch being capable of switching between a connected state where rotary powers from an internal combustion engine are transmitted to said input shaft and a disconnected state where they are not transmitted to said input shaft;
an output shaft on which a plurality of gears are put in place integrally rotatable therewith or idly rotatable thereto, the gears always meshing with said plurality of the gears of said input shaft;
a change-speed mechanism having a plurality of change-speed stages that are disposed between said input shaft and said output shaft, and a change-speed stage selector device that selects one change-speed stage from out of said plurality of the change-speed stages; and
a rotary electric appliance;
wherein the power transmission apparatus further comprises:
   a rotary-electric-appliance shaft whose axial direction is parallel to an axial direction of said input shaft, which makes a rotary shaft of said rotary electric appliance, and on which a rotary-electric-appliance-shaft gear is to be put in place, the rotary-electric-appliance-shaft gear being capable of rotating integrally therewith; and
   a deceleration means being capable of amplifying torques to be output from said rotary electric appliance, the deceleration means having:
      a transmission shaft whose axial direction is parallel to the axial direction of said input shaft;
      a transmission gear that rotates integrally with said transmission shaft, and which always meshes with said rotary-electric-appliance-shaft gear;
      an input-shaft transmission gear that always meshes with one of said gears rotating integrally with respect to said input shaft, and which is capable of rotating idly with respect to said transmission shaft;
      an output-shaft transmission gear that always meshes with one of said plurality of the gears rotating integrally with respect to said output shaft, which always meshes with one of said gears being capable of rotating idly with respect to said input shaft, and which is capable of rotating idly with respect to said transmission shaft; and
      a power switcher device that rotates integrally with said transmission gear, and which is capable of switching between a state where it engages with either said input-shaft transmission gear or said output-shaft transmission gear to be capable of rotating integrally therewith and another state where it does not engages with any one of them.

Moreover, other constitutional characteristics of the invention for solving the aforementioned assignment lie in that it is a power transmission apparatus comprising:
an input shaft on which a plurality of gears are put in place, the gears to be put in place being rotatable integrally therewith;
a clutch being capable of switching between a connected state where rotary powers from an internal combustion engine are transmitted to said input shaft and a disconnected state where they are not transmitted to said input shaft;
an output shaft on which a plurality of gears are put in place integrally rotatable therewith or idly rotatable thereto, the gears always meshing with said plurality of the gears of said input shaft;
a change-speed mechanism having a plurality of change-speed stages that are disposed between said input shaft and said output shaft, and a change-speed stage selector device that selects one change-speed stage from out of said plurality of the change-speed stages; and
a rotary electric appliance;
wherein the power transmission apparatus further comprises:
   a transmission shaft whose axial direction is parallel to an axial direction of said input shaft, on which one or more transmission gears, which are capable of rotating integrally therewith, and an idler gear, which always meshes with one of said plurality of the gears rotating integrally with respect to said output shaft, and idler gear which is capable of rotating idly thereto, are put in place; and
   a deceleration means being capable of amplifying torques to be output from said rotary electric appliance, the deceleration means having:
      a rotary-electric-appliance shaft whose axial direction is parallel to the axial direction of said input shaft, and which makes a rotary shaft of said rotary electric appliance;
      a rotary-electric-appliance-shaft gear that always meshes with one of said transmission gears, and which is capable of rotating integrally with respect to said rotary-electric-appliance shaft;
      a deceleration gear that rotates idly with respect said rotary-electric-appliance shaft, and which always meshes with one of said gears rotating integrally with respect to said transmission shaft;
      an input-shaft transmission gear that always meshes with one of said gears rotating integrally with respect to said input shaft, and which is capable of rotating idly with respect to said rotary-electric-appliance shaft and said deceleration gear;
      an output-shaft transmission gear that always meshes with said idler gear, and which is capable of rotating idly with respect to said rotary-electric-appliance shaft and said deceleration gear; and
      a power switcher device that rotates integrally with said deceleration gear, and which is capable of switching between a state where it engages with either said input-shaft transmission gear or said output-shaft transmission gear to be capable of rotating integrally therewith and another state where it does not engages with any one of them.

### Effect of the Invention

In the invention being directed to claim 1, it is possible to switch the rotary powers of the rotary electric appliance so that they are transmitted to either the input shaft or the output shaft. And, the rotary electric appliance is put in place on another shaft that is distinct from the input shaft and the output shaft, and is decelerated by two stages by further putting still another transmission shaft in place, and thereby it is possible to amplify the torques to be output from the rotary electric appliance and then transmit them to the input shaft or the output shaft. And, since the rotary electric appliance is not put in place on the input shaft and the output shaft, but since it is put in place on another shaft that is distinct from the input shaft and the output shaft, it is possible to inhibit the resulting overall length from extending, in addition to having secured change gear ratios.

In the invention being directed to claim 2, it is possible to switch the rotary powers of the rotary electric appliance so that they are transmitted to either the input shaft or the output shaft. And, the power transmission apparatus according to the present invention decelerates by three stages because the rotary electric appliance is put in place on another shaft that is distinct from the input shaft and the output shaft and because still another transmission shaft is further put in place, and thereby it is possible to amplify the torques to be output from the rotary electric appliance and then transmit them to the input shaft or the output shaft. And, since the rotary electric appliance is not put in place on the input shaft and the output shaft, but since it is put in place on another shaft that is distinct from the input shaft and the output shaft, it is possible to inhibit the resulting overall length from extending, in addition to having secured change gear ratios.

### BRIEF DESCRIPTION OF THE DRAWINGS

Fig. 1 is a skeleton diagram of a power transmission apparatus 11 according to present Embodiment No. 1; and
Fig. 2 is a skeleton diagram of another power transmission apparatus 12 according to present Embodiment No. 2.

### Explanation on Reference Numerals

11, 12: Power Transmission Apparatus; 13: Clutch;
14: Motor (i.e., Rotary Electric Appliance);
2: Input Shaft; 21 through 26; Gears;
3: Output Shaft; 31 through 35, 36a, 36b: Gears; 30: Output Gear; 37 through 39; Change-speed Stage Selector Devices;
4: Change-speed Mechanism;
5, 81: Rotary-electric-appliance Shaft;
51, 82: Rotary-electric-appliance-shaft Gear;
6, 8: Deceleration Means; 61: Transmission Shaft; 62: Transmission Gear; 63, 84; Input-shaft Transmission Gear; 64, 85: Output-shaft Transmission Gear; 65, 86: Power Switcher Mechanism;
7: Transmission Shaft; 71, 72: Transmission Gear; 73: Idler Gear;
83: Deceleration Gear; and
91: Gear

### BEST MODE FOR CARRYING OUT THE INVENTION

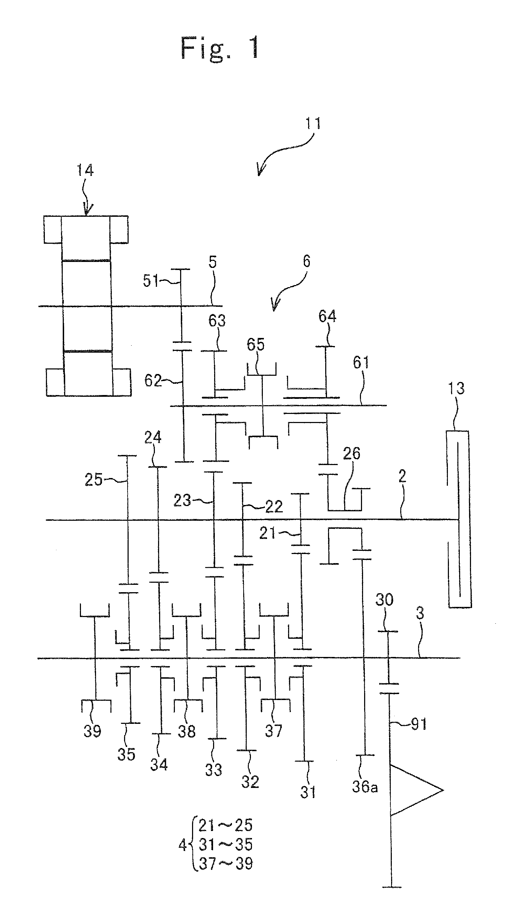

Representative embodiments according to the present invention will be explained with reference to Fig. 1 through Fig. 2. Power transmission apparatuses being directed to the present embodiments are mounted on vehicles.

### (Embodiment No. 1)

As illustrated in Fig. 1, a power transmission apparatus 11 according to present Embodiment No.1 comprises a clutch 13, an input shaft 2, an output shaft 3, a change-speed mechanism 4, a motor (i.e., a rotary electric appliance) 14, a rotary-electric-appliance shaft 5, and a deceleration means 6.

The input shaft 2 is coupled with the later-described clutch 13 at one of the opposite ends, and is supported rotatably to a case (not shown) for the power transmission apparatus 11, or to a member being fixed to the case, at the other one of the opposite ends. On the input shaft 2, five gears 21 through 25 that are capable of rotating integrally therewith, and a gear 26 that is capable of rotating idly thereto are put in place.

The clutch 13 is a device that switches between a connected state where rotary powers from an internal combustion engine (not shown) are transmitted to the input shaft 2 and a disconnected state where they are not transmitted to the input shaft 2, and is positioned between the internal combustion engine and the input shaft 2.

The output shaft 3 is put in place so that the axial direction is parallel to the axial direction of the input shaft 2, and has opposite ends that are supported rotatably to the case for the power transmission apparatus 11, or to a member being fixed to the case; and five gears 31 through 35, which are rotatable idly with respect to the output shaft 3, and a gear 36a, which rotates integrally with the output shaft 3, are put in place thereon. The gears 31 through 35 always mesh with the five gears 21 through 25 of the input shaft 2 on the one-to-one basis, respectively. The gear 36a always meshes with the gear 26. Further, three change-speed stage selector devices 37 through 39, which rotate integrally with the output shaft 3, are put in place on the output shaft 3. Moreover, an output gear 30 is put in place thereon, output gear 30 which rotates integrally with the output shaft 3, and output gear 30 which always meshes with a gear 91 of a differential mechanism (not shown) that transmits the rotary powers to the side of vehicle's wheels.

The change-speed mechanism 4 is constituted of the gears 21 through 26 whose rotary shaft is the input shaft 2, the gears 31 through 35 whose rotary shaft is the output shaft 3, and the change-speed stage selector devices 37 through 39. The first change-speed stage, the second change-speed stage, the third change-speed stage, the fourth change-speed stage, and the fifth change-speed stage are materialized by means of change gear ratios that result from combinations of the gear 21 and the gear 31, the gear 22 and the gear 32, the gear 23 and the gear 33, the gear 24 and the gear 34, and the gear 25 and the gear 35, respectively. The change-speed stage selector device 37 is put in place between the gear 31 and the gear 32, and the change-speed stage selector device 38 is put in place between the gear 33 and the gear 34 so that they are capable of moving in the axial direction. Each of the change-speed stage selector devices 37 comprise a state where it engages with one of the gears so as to be capable of rotating integrally therewith, and a neutral state where it does not engage with any one of the gears. And, the change-speed stage selector device 39 comprises another state where it is capable of sliding in the axial direction and then engages with the gear 35, and another neutral state where it does not engage with the gear 35. In the power transmission apparatus 11 according to Embodiment No. 1, one of the change-speed stage selector devices 37 through 39 is moved axially, and is thereby engaged with any one of the change-speed stage to be capable of rotating integrally therewith, when converting the rotary powers with a change gear ratio of any one of the change-speed stages from that of the first change-speed stage to that of the fifth change-speed stage. For example, when selecting the first change-speed stage, the change-speed stage selector device 37 is moved toward the gear 31, and then the change-speed stage selector device 37 and the gear 31 are engaged with each other so that they are capable of rotating integrally with each other. The other change-speed stage selector devices 38 and 39 are put on standby in the neutral state so that they do not engage with any one of the change-speed stages.

The motor 14 has the later-described rotary-electric-appliance shaft 5 making the rotary shaft, and outputs rotary powers to the rotary-electric-appliance shaft 5.

The rotary-electric-appliance shaft 5 is put in place so that the axial direction is parallel to the axial direction of the input shaft 2, and has opposite ends that are supported rotatably to the case for the power transmission apparatus 11, or to a member being fixed to the case; and rotates by means of torques to be output from the motor 14. And, a rotary-electric-appliance-shaft gear 51, which is capable of rotating integrally with the rotary-electric-appliance shaft 5, is put in place on the rotary-electric-appliance shaft 5.

The deceleration means 6 comprises a transmission shaft 61, a transmission gear 62, an input-shaft transmission gear 63, an output-shaft transmission gear 64, and a power switcher device 65. The transmission shaft 61 is put in place so that the axial direction is parallel to the axial direction of the input shaft 2, and has opposite ends that are supported rotatably to the case for the power transmission apparatus 11, or to a member being fixed to the case. The transmission gear 62 rotates integrally with the transmission shaft 61, and always meshes with the rotary-electric-appliance-shaft gear 51. The input-shaft transmission gear 63 is a gear that always meshes with the gear 23 rotating integrally with the input shaft 2, and which is capable of rotating idly with respect to the transmission shaft 61. The output-shaft transmission gear 64 is a gear that always meshes with the gear 26 rotating idly with respect to the input shaft 2, and which is capable of rotating idly with respect to the transmission shaft 62. The power switcher device 65 is a device that is capable of rotating integrally with the transmission shaft 61 and moving in the axial direction of the transmission shaft 61, and is capable of switching between an input-shaft output state where the power switcher device 65 engages with the input-shaft transmission gear 63 to be capable of rotating integrally with the input-shaft transmission gear 63, an output-shaft output state where the power switcher device 65 engages with the output-shaft transmission gear 64 to be capable of rotating integrally with the output-shaft transmission gear 64, and a disconnected state where the power switcher device 65 does not engage with any one of the input-shaft transmission gear 63 and the output-shaft transmission gear 64.

Next, explanations will be made on operations of the power transmission apparatus 11 according to present Embodiment No. 1.

In the power transmission apparatus 11, the outputs from the motor 14 are neither transmitted to the input shaft 2 nor to the output shaft 3 when the power switcher device 65 is put in the disconnected state; whereas the rotary powers of the internal combustion engine are transmitted to the input shaft 2 when the clutch 13 is put in the connected state. One of the change-speed stage selector devices 37 through 39 is engaged with one of the gears (i.e., one of the gears 31 through 35) for one of the change-speed stages that corresponds to the one of the above, and thereby the rotary powers, which are converted through a desired change gear ratio, are transmitted from the output gear to the gear 91 of the differential mechanism.

In a case where the rotary powers of the motor 14 are transmitted to the input shaft 2, the power switcher device 65 is put in the input-shaft output state. The rotary powers being output from the motor 14 are transmitted to the rotary-electric-appliance shaft 5, the rotary-electric-appliance-shaft gear 51, the transmission gear 62 and the transmission shaft 61 in this order. Since the power switcher device 65, which rotates integrally with the transmission shaft 61, is put in the input-shaft output state, it engages with the input-shaft transmission gear 63, so the rotary powers are transmitted from the input-shaft transmission gear 63 to the gear 23 of the input shaft 2 so that the input shaft 2 is rotated by means of the outputs from the motor 14. On this occasion, the clutch is put in the disconnected state, and then one of the change-speed stage selector devices 37 through 39 is engaged with one of the change-speed stages from the first change-speed stage to the fifth change-speed stage; and thereby the rotarypowers are converted with a desired change gear ratio so that it is possible to transmit them to the gear 91 of the differential mechanism by way of the output gear 30. It is also possible to compensate for the rotary powers to be output from the internal combustion engine by putting the clutch 13 in the connected state. Alternatively, it is even feasible to start the internal combustion engine with the motor 14 by putting every one of the change-speed selector devices 37 through 39 in the neutral state and then putting the clutch 13 in the connected state.

In another case where the rotary powers of the motor 14 are transmitted to the output shaft 3 without ever converting them by means of the change-speed mechanism 4, the power switcher device 65 is put in the output-shaft output state. On this occasion, the clutch 13 is put in the disconnected state. The rotary powers being output from the motor 14 are transmitted to the rotary-electric-appliance shaft 5, the rotary-electric-appliance-shaft gear 51, the transmission gear 62 and the transmission shaft 61 in this order. Since the power switcher device 65, which rotates integrally with the transmission shaft 61, is put in the output-shaft output state, it engages with the output-shaft transmission gear 64, so the rotary powers are transmitted from the output-shaft transmission gear 64 to the gear 26 that rotates idly with respect to the input shaft 2. Since the gear 26 always meshes with the gear 36a that rotates integrally with the output shaft 3, the rotary powers are transmitted from the gear 26 to the gear 36a, so they are transmitted to the gear 91 of the differential mechanism by way of the output gear 30.

In accordance with the power transmission apparatus 11 according to present Embodiment No. 1, it is possible to switch the rotary powers of the motor 14 so that they are transmitted to either the input shaft 2 or the output shaft 3. And, the motor 14 is put in place on the rotary-electric-appliance shaft 5 that is distinct from the input shaft 2 and the output shaft 3, and is decelerated by two stages by further putting still another transmission shaft 6 in place, and thereby it is possible to amplify the torques to be output from the motor 14 and then transmit them to the input shaft 2 or the output shaft 3. And, since the motor 14 is not put in place on the input shaft 2 and the output shaft 3, but since it is put in place on another shaft that is distinct from the input shaft 2 and the output shaft 3, it is possible to inhibit the resulting overall length from extending. Alternatively, compared with an apparatus in which the motor 14 is put in place coaxially with the input shaft 2 or the output shaft 3, it is possible to shorten the overall length without ever decreasing the change-speed stages (or while securing the change gear ratios).

### (Embodiment No. 2)

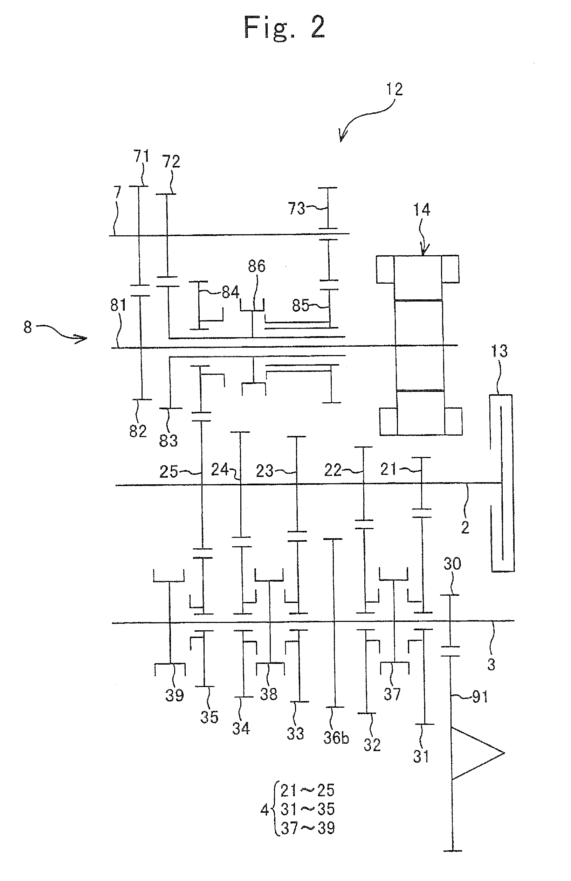

As illustrated in Fig. 2, a power transmission apparatus 12 according to present Embodiment No. 2 comprises a clutch 13, an input shaft 2, an output shaft 3, a change-speed mechanism 4, a motor (i.e., a rotary electric appliance) 14, a transmission shaft 7, and a deceleration means 8.

The input shaft 2 is coupled with the later-described clutch 13 at one of the opposite ends, and is supported rotatably to a case (not shown) for the power transmission apparatus 12, or to a member being fixed to the case, at the other one of the opposite ends. On the input shaft 2, five gears 21 through 25 that are capable of rotating integrally therewith are put in place.

The clutch 13 is a device that switches between a connected state where rotary powers from an internal combustion engine (not shown) are transmitted to the input shaft 2 and a disconnected state where they are not transmitted to the input shaft 2, and is positioned between the internal combustion engine and the input shaft 2.

The output shaft 3 is put in place so that the axial direction is parallel to the axial direction of the input shaft 2, and has opposite ends that are supported rotatably to the case for the power transmission apparatus 12, or to a member being fixed to the case; and five gears 31 through 35, which are rotatable idly with respect to the output shaft 3, and three change-speed stage selector devices 37 through 39, which rotate integrally with the output shaft 3, are put in place thereon. The gears 31 through 35 always mesh with the five gears 21 through 25 of the input shaft 2 on theone-to-onebasis, respectively. The change-speed stage selector devices 37 through 39 are capable of moving axially. In addition, on the output shaft 3, a gear 36b is put in place thereon, gear 36b which always meshes with a later-described idler gear 73, and gear 36b which rotates integrally with the output shaft 3; and an output gear 30 is put in place thereon, output gear 30 which rotates integrally with the output shaft 3, and output gear 30 which always meshes with a gear 91 of a differential mechanism (not shown) that transmits the rotary powers to the side of vehicle's wheels.

The change-speed mechanism 4 is constituted of the gears 21 through 26 whose rotary shaft is the input shaft 2, the gears 31 through 35 whose rotary shaft is the output shaft 3, and the change-speed stage selector devices 37 through 39. The first change-speed stage, the second change-speed stage, the third change-speed stage, the fourth change-speed stage, and the fifth change-speed stage are materialized by means of change gear ratios that result from combinations of the gear 21 and the gear 31, the gear 22 and the gear 32, the gear 23 and the gear 33, the gear 24 and the gear 34, and the gear 25 and the gear 35, respectively. The change-speed stage selector device 37 is put in place between the gear 31 and the gear 32, and the change-speed stage selector device 38 is put in place between the gear 33 and the gear 34 so that they are capable of moving in the axial direction. Each of the change-speed stage selector devices 37 comprises a state where it engages with one of the gears so as to be capable of rotating integrally therewith, and a neutral state where it does not engage with any one of the gears. And, the change-speed stage selector device 39 comprises another state where it is capable of sliding in the axial direction and then engages with the gear 35, and another neutral state where it does not engage with the gear 35. In the power transmission apparatus 12 according to Embodiment No. 2, one of the change-speed stage selector devices 37 through 39 is moved axially, and is thereby engaged with any one of the change-speed stage to be capable of rotating integrally therewith, when converting the rotary powers with a change gear ratio of any one of the change-speed stages from that of the first change-speed stage to that of the fifth change-speed stage. For example, when selecting the fifth change-speed stage, the change-speed stage selector device 39 is moved toward the gear 35, and then the change-speed stage selector device 39 and the gear 35 are engaged with each other so that they are capable of rotating integrally with each other. The other change-speed stage selector devices 37 and 38 are put on standby in the neutral state so that they do not engage with any one of the change-speed stages.

The motor 14 has a later-described rotary-electric-appliance shaft 81 making the rotary shaft, and outputs rotary powers to the rotary-electric-appliance shaft 81.

The transmission shaft 7 is put in place so that the axial direction is parallel to the axial direction of the input shaft 2, and has opposite ends that are supported rotatably to the case for the power transmission apparatus 12, or to a member being fixed to the case. On the transmission shaft 7, two gears 71 and 72, which rotate integrally with the transmission shaft 7, and the idler gear 73, which is capable of rotating idly with respect to the transmission shaft 7, are put in place thereon. The idler gear 73 always meshes with the gear 36b that rotates integrally with the output shaft 3.

The deceleration means 8 comprises the rotary-electric-appliance shaft 81, a rotary-electric-appliance-shaft gear 82, a deceleration gear 83, an input-shaft transmission gear 84, an output-shaft transmission gear 85, and a power switcher device 86. The rotary-electric-appliance shaft 81 has an axial direction that is parallel to the axial direction of the input shaft 2, and opposite ends that are supported rotatably to the case for the power transmission apparatus 12, or to a member being fixed to the case. The rotary-electric-appliance-shaft gear 82 rotates integrally with the rotary-electric-appliance shaft 81, and always meshes with the transmission gear 71 of the transmission shaft 71. The deceleration gear 83 rotates idly with respect to the rotary-electric-appliance shaft 81, and always meshes with the transmission gear 72 of the transmission shaft 7. The input-shaft transmission gear 84 is a gear that always meshes with the gear 25 rotating integrally with the input shaft 2, and which is capable of rotating idly with respect to the transmission shaft 7 and the deceleration gear 83. The output-shaft transmission gear 85 is a gear that always meshes with the idler gear 73 of the transmission shaft 7, and which is capable of rotating idly with respect to the transmission shaft 7 and the deceleration gear 83. The power switcher device 86 is a device that rotates integrally with the deceleration gear 83 and is capable of moving in the axial direction of the rotary-electric-appliance shaft 81, and is capable of switching between an input-shaft output state where the power switcher device 86 engages with the input-shaft transmission gear 84 to be capable of rotating integrally with the input-shaft transmission gear 84, an output-shaft output state where the power switcher device 86 engages with the output-shaft transmission gear 85 to be capable of rotating integrally with the output-shaft transmission gear 85, and a disconnected state where the power switcher device 86 does not engage with any one of the input-shaft transmission gear 84 and the output-shaft transmission gear 85.

Next, explanations will be made on operations of the power transmission apparatus 12 according to present Embodiment No. 2.

In the power transmission apparatus 12, the outputs from the motor 14 are neither transmitted to the input shaft 2 nor to the output shaft 3 when the power switcher device 86 is put in the disconnected state; whereas the rotary powers of the internal combustion engine are transmitted to the input shaft 2 when the clutch 13 is put in the connected state. One of the change-speed stage selector devices 37 through 39 is engaged with one of the gears (i.e., one of the gears 31 through 35) for one of the change-speed stages that corresponds to the one of the above, and thereby the rotary powers, which are converted through a desired change gear ratio, are transmitted from the output gear to the gear 91 of the differential mechanism.

In a case where the rotary powers of the motor 14 are transmitted to the input shaft 2, the power switcher device 86 is put in the input-shaft output state. The rotary powers being output from the motor 14 are transmitted to the rotary-electric-appliance shaft 81, the rotary-electric-appliance-shaft gear 82, the transmission gear 71, the transmission shaft 7 and the transmission gear 72 in this order. And, since the rotary powers are transmitted from the transmission gear 72 to the deceleration gear 83, and since the power switcher device 86, which rotates integrally with the transmission gear 83, is put in the input-shaft output state, the rotary powers are transmitted from the input-shaft transmission gear 84 to the gear 25 so that the input shaft 2 is rotated by means of the outputs from the motor 14. On this occasion, the clutch is put in the disconnected state, and then one of the change-speed stage selector devices 37 through 39 is engaged with one of the change-speed stages from the first change-speed stage to the fifth change-speed stage; and thereby the rotarypowers are converted with a desired change gear ratio so that it is possible to transmit them to the gear 91 of the differential mechanism by way of the output gear 30. It is also possible to compensate for the rotary powers to be output from the internal combustion engine by putting the clutch 13 in the connected state. Alternatively, it is even feasible to start the internal combustion engine with the motor 14 by putting every one of the change-speed selector devices 37 through 39 in the neutral state and then putting the clutch 13 in the connected state.

In another case where the rotary powers of the motor 14 are transmitted to the output shaft 3 without ever converting them by means of the change-speed mechanism 4, the power switcher device 86 is put in the output-shaft output state. On this occasion, the clutch 13 is put in the disconnected state. The rotary powers being output from the motor 14 are transmitted to the rotary-electric-appliance shaft 81, the rotary-electric-appliance-shaft gear 82, the transmission gear 71, the transmission shaft 7 and the transmission gear 72 in this order. And, since the rotary powers are transmitted from the transmission gear 72 to the deceleration gear 83, and since the power switcher device 86, which rotates integrally with the deceleration gear 83, is put in the output-shaft output state, the rotary powers are transmitted from the output-shaft transmission gear 85 to the idler gear 73. Since the idler gear 73 always meshes with the gear 36b that rotates integrally with the output shaft 3, the rotary powers are transmitted to the output shaft 3, so they are transmitted to the gear 91 of the differential mechanism by way of the output gear 30.

In accordance with the power transmission apparatus 12 according to present Embodiment No. 2, it is possible to switch the rotary powers of the motor 14 so that they are transmitted to either the input shaft 2 or the output shaft 3. And, the motor 14 is put in place on the rotary-electric-appliance shaft 5 that is distinct from the input shaft 2 and the output shaft 3, and is decelerated by three stages by further putting still another transmission shaft 7 in place, and thereby it is possible to amplify the torques to be output from the motor 14 and then transmit them to the input shaft 2 or the output shaft 3. And, since the motor 14 is not put in place on the input shaft 2 and the output shaft 3, but since it is put in place on another shaft that is distinct from the input shaft 2 and the output shaft 3, it is possible to inhibit the resulting overall length from extending. Alternatively, compared with an apparatus in which the motor 14 is put in place coaxially with the input shaft 2 or the output shaft 3, it is possible to shorten the overall length without ever decreasing the change-speed stages (or while securing the change gear ratios).

Although explanations have been made so far on some of the preferred embodiment modes according to the present invention, the present invention is not one which is limited to the aforementioned embodiment modes. For example, it is possible to make a gear, which is employed in order to transmit the rotary powers to be output from the motor 14 to the input shaft 2 (e.g., the gear 23 in Embodiment No. 1, and the gear 25 in Embodiment No. 2), with one of the other gears that rotate integrally with the input shaft 2. To put it differently, the change is made feasible by means of altering the layout of the respective gears on the input shaft 2, or the layout of the constituent elements of the deceleration means 6 or 8, and the like.

## Claims

1. A power transmission apparatus being **characterized in that** it is a power transmission apparatus comprising:
an input shaft on which a plurality of gears are put in place, the gears to be put in place being rotatable integrally therewith or being rotatable idly thereto;
a clutch being capable of switching between a connected state where rotary powers from an internal combustion engine are transmitted to said input shaft and a disconnected state where they are not transmitted to said input shaft;
an output shaft on which a plurality of gears are put in place integrally rotatable therewith or idly rotatable thereto, the gears always meshing with said plurality of the gears of said input shaft;
a change-speed mechanism having a plurality of change-speed stages that are disposed between said input shaft and said output shaft, and a change-speed stage selector device that selects one change-speed stage from out of said plurality of the change-speed stages; and
a rotary electric appliance;
wherein the power transmission apparatus further comprises:
a rotary-electric-appliance shaft whose axial direction is parallel to an axial direction of said input shaft, which makes a rotary shaft of said rotary electric appliance, and on which a rotary-electric-appliance-shaft gear is to be put in place, the rotary-electric-appliance-shaft gear being capable of rotating integrally therewith; and
a deceleration means being capable of amplifying torques to be output from said rotary electric appliance, the deceleration means having:
a transmission shaft whose axial direction is parallel to the axial direction of said input shaft;
a transmission gear that rotates integrally with said transmission shaft, and which always meshes with said rotary-electric-appliance-shaft gear;
an input-shaft transmission gear that always meshes with one of said gears rotating integrally with respect to said input shaft, and which is capable of rotating idly with respect to said transmission shaft;
an output-shaft transmission gear that always meshes with one of said plurality of the gears rotating integrally with respect to said output shaft, which always meshes with one of said gears being capable of rotating idly with respect to said input shaft, and which is capable of rotating idly with respect to said transmission shaft; and
a power switcher device that rotates integrally with said transmission gear, and which is capable of switching between a state where it engages with either said input-shaft transmission gear or said output-shaft transmission gear to be capable of rotating integrally therewith and another state where it does not engages with any one of them.

2. A power transmission apparatus being **characterized in that** it is a power transmission apparatus comprising:
an input shaft on which a plurality of gears are put in place, the gears to be put in place being rotatable integrally therewith;
a clutch being capable of switching between a connected state where rotary powers from an internal combustion engine are transmitted to said input shaft and a disconnected state where they are not transmitted to said input shaft;
an output shaft on which a plurality of gears are put in place integrally rotatable therewith or idly rotatable thereto, the gears always meshing with said plurality of the gears of said input shaft;
a change-speed mechanism having a plurality of change-speed stages that are disposed between said input shaft and said output shaft, and a change-speed stage selector device that selects one change-speed stage from out of said plurality of the change-speed stages; and
a rotary electric appliance;
wherein the power transmission apparatus further comprises:
a transmission shaft whose axial direction is parallel to an axial direction of said input shaft, on which one or more transmission gears, which are capable of rotating integrally therewith, and an idler gear, which always meshes with one of said plurality of the gears rotating integrally with respect to said output shaft, and idler gear which is capable of rotating idly thereto, are put in place; and
a deceleration means being capable of amplifying torques to be output from said rotary electric appliance, the deceleration means having:
a rotary-electric-appliance shaft whose axial direction is parallel to the axial direction of said input shaft, and which makes a rotary shaft of said rotary electric appliance;
a rotary-electric-appliance-shaft gear that always meshes with one of said transmission gears, and which is capable of rotating integrally with respect to said rotary-electric-appliance shaft;
a deceleration gear that rotates idly with respect said rotary-electric-appliance shaft, and which always meshes with one of said gears rotating integrally with respect to said transmission shaft;
an input-shaft transmission gear that always meshes with one of said gears rotating integrally with respect to said input shaft, and which is capable of rotating idly with respect to said rotary-electric-appliance shaft and said deceleration gear;
an output-shaft transmission gear that always meshes with said idler gear, and which is capable of rotating idly with respect to said rotary-electric-appliance shaft and said deceleration gear; and
a power switcher device that rotates integrally with said deceleration gear, and which is capable of switching between a state where it engages with either said input-shaft transmission gear or said output-shaft transmission gear to be capable of rotating integrally therewith and another state where it does not engages with any one of them.
